# EUROPÄISCHE PATENTANMELDUNG

(11) **EP 1 033 078 A1**
(43) Veröffentlichungstag der Anmeldung: **06.09.2000**
(21) Anmeldenummer: 00104100.3
(22) Anmeldetag: 28.02.2000
(51) Int. Cl.: A23K 1/00, A23K 1/14, A23K 1/18, A23K 3/00

(54) **Verfahren zur hydrothermischen Behandlung von Futtermitteln**

(30) Priorität: 02.03.1999 DE 19909078
(71) Anmelder: Amandus Kahl GmbH & Co., 21465 Reinbek (DE)
(72) Erfinder: Behrmann, Joachim, 21465 Wentorf (DE); Lucht, Hans-Walter, 21465 Reinbek (DE); Sitzmann, Werner Dr.-Ing., 21075 Hamburg (DE)
(74) Vertreter: Glawe, Delfs, Moll & Partner

(57) **Zusammenfassung**

Das Verfahren zur hydrothermischen Behandlung von Einzelfuttermitteln und Futtermittelmischungen für Wiederkäuer, insbesondere Milchkühe und Mastrinder zeichnet sich dadurch aus, daß das feuchte oder angefeuchtete Rohmaterial zum Erhöhen des im Pansen der Kuh nichtverdaubaren Kohlehydratanteils, insbesondere Stärkeanteils einer erhöhten Temperatur von mindestens 80°C und höchstens 180°C und einem Druck von 1 bis ca. 50 bar ausgesetzt wird.

## Beschreibung

Die Erfindung betrifft ein Verfahren zur hydrothermischen Behandlung von Einzelfuttermitteln und Futtermittelmischungen für Wiederkäuer, insbesondere Milchkühe und Mastrinder.

Es ist bekannt, Futtermittel als Einzelkomponente oder als Mischung einer hydrothermischen Behandlung auszusetzen, indem das feuchte oder angefeuchtete Rohmaterial einer erhöhten Temperatur oder einer erhöhten Temperatur und erhöhtem Druck ausgesetzt wird (EP 0 331 207). Der Zweck der erhöhten Temperatur ist es dabei, das Futtermittel in eine besser verdauliche bzw. vom Tier besser verwertbare Form zu bringen. Außerdem sollen Keime abgetötet werden. Durch die erhöhte Temperatur wird z. B. Stärke aufgeschlossen, was die für die Verdauung erforderliche Umwandlung in Glucose bewirkt oder aber diese Spaltung durch körpereigene Enzyme im Verdauungstakt des Tieres erleichtert.

Während die Erhöhung des Stärkeaufschlusses für Einmagentiere (Monogastrier) wie Geflügel oder Schweine unmittelbar Vorteile für die Stärkeverdauung mit sich bringt, ist dies bei Wiederkäuern wie Milchkühen oder Mastrindern differenziert zu sehen, weil das aufgenommene Futter zunächst in den Pansen gelangt und erst dann in den Magen und Dünndarm.

Für eine hohe Milchleistung beim Milchvieh ist es einerseits wichtig, genügend Kohlenhydrate bzw. Stärke im Pansen für die Produktion von Bakterieneiweiß zur Verfügung zu stellen. Andererseits soll aber die Stärke besser im Dünndarm verdaut werden, um direkt zur Versorgung mit Glucose zur Milchbildung beizutragen. Damit nicht zu viel Stärke im Pansen abgebaut wird, muß die Stärke "geschützt" werden. Im Dünndarm hingegen erfolgt eine fast vollständige Verdauung durch körpereigene Enzyme bis zur Glucose. Es muß also versucht werden, die Stärke durch technische Behandlung so zu schützen, daß möglichst ein Teil der aufgenommenen Stärke in den Dünndarm gelangt und dort effizient durch enzymatischen Abbau in Glucose abgebaut wird. Um den enzymatischen Stärkeabbau zu unterstützen, ist ein gewisser Stärkeaufschluß erwünscht, der jedoch nicht die Pansenabbaubarkeit erhöhen soll. Dadurch kann die Milchproduktion entscheidend erhöht werden. Der Vorteil dieser Erhöhung der Milchproduktion ist nicht nur ein ökonomischer, daß weniger Futtermittel pro Liter erzeugter Milch erforderlich ist. Es tritt auch der ökologische Vorteil auf, daß die Menge von umweltschädlichen Stoffen (Methan, Nitrate, Phosphate), die von der Kuh abgegeben werden, pro Liter erzeugter Milch verringert wird.

Die Aufgabe der Erfindung besteht in der Schaffung eines Verfahrens, mit dem der Anteil der Kohlehydrate, insbesondere Stärke, erhöht werden kann, der ohne Verdauung im Pansen in den Dünndarm gelangt. Dies betrifft leicht abbaubare Stärken aus z. B. Gerste, Weizen, Hafer oder Leguminosen. Schwer abbaubare Stärken aus z. B. Mais oder Sorghum hingegen müssen so modifiziert werden, daß insgesamt die Verdauung im Pansen und im Dünndarm erhöht wird.

Die erfindungsgemäße Lösung besteht darin, daß das feuchte oder angefeuchtete Rohmaterial zum Erhöhen des im Pansen der Kuh nichtverdaubaren Kohlehydratanteils, insbesondere Stärkeanteils, einer erhöhten Temperatur von mindestens 80°C und höchstens 180°C und einem Druck zwischen 1 bar und ca. 50 bar ausgesetzt wird.

Die Erfindung hat erkannt, daß durch die Erwärmung oder Erhitzung des feuchten Rohmaterials unter den erfindungsgemäßen Bedingungen, jedenfalls was die Stärke anbetrifft, im Gegensatz zu dem, was bisher bekannt ist, nicht die Verdaulichkeit allgemein erhöht wird, sondern im Gegenteil die Verdaulichkeit der Stärke und anderer Kohlehydrate im Pansen verringert wird. Es wird also durch das erfindungsgemäße Verfahren wenigstens in dieser Hinsicht genau das Gegenteil von dem erreicht, was man normalerweise mit ähnlichen Verfahren beim Stand der Technik erreichen will.

Es kann zwar nicht ausgeschlossen werden, daß die Stärke und andere Kohlehydrate zum Teil durch die hydrothermische Behandlung auch in eine leichter verdauliche Form übergeführt werden. Entscheidend ist aber vermutlich bei dem überraschenden Ergebnis, daß durch die Erfindung erreicht wird, daß Proteine, die die Stärkekörner umgeben, koagulieren und so die Stärkekörner mechanisch vor der Verdauung beim Durchgang durch den Pansen geschützt werden. Die Proteine werden dann im Dünndarm durch Verdauungsenzyme in Polypeptide und Aminosäuren zerlegt, so daß sie dann ebenfalls vom Metabolismus des Wiederkäuers aufgenommen und verarbeitet werden können. Die Kohlehydrate, insbesondere Stärke, werden im Dünndarm enzymatisch in Glucose umgewandelt, so daß sie ebenfalls für den Metabolismus und letztlich zur Milcherzeugung zur Verfügung stehen.

Durch die Erfindung ist es also möglich, Stärke teilweise vor der Verdauung im Pansen zu schützen, so daß sie im Dünndarm in Glucose umgewandelt und damit zur Milcherzeugung zur Verfügung steht, wodurch insgesamt die Milchleistung der Kuh erhöht werden kann.

Die Einzelheiten und Parameter des Verfahrens werden vom Rohmaterial bzw. Futtermittel abhängen. Die Stärkekörner sind in verschiedenen Pflanzen verschieden groß und haben auch verschiedene chemische Zusammensetzungen. Zum Beispiel ist die Stärke im Mais sehr stabil, so daß eine Behandlung nach dem erfindungsgemäßen Verfahren aus einem anderen Grunde notwendig ist. Mais-, Sorghum- oder Reisstärke sind so stabil, daß diese Stärken schwerer im Pansen abbaubar sind als Gerste- oder Weizenstärke. Allerdings ist auch die enzymatische Verdauung im Dünndarm schlechter, so daß die Stärkeverdaulichkeit im Tier insgesamt um ca. 10 % schlechter ist als z. B. bei Weizenstärke. Durch eine erfindungsgemäße Wärmebehandlung kann die Maisstärkeverdauung so beeinflußt werden, daß ein verzögerter Abbau im Pansen, jedoch ein fast vollständiger Abbau im Dünn- und Dickdarm erreicht wird. Bei anderen Futtermitteln oder Mischungen ist das erfindungsgemäße Verfahren ebenfalls sehr erfolgreich, insbesondere bei Leguminosen (Erbsen, Bohnen, Lupinen) Gerste, Hafer, Weizen und Tapioka. Das bedeutet aber nicht, daß das erfindungsgemäße Verfahren nicht auch bei anderen Futtermitteln angewendet werden kann.

Zweckmäßigerweise wird dem Futtermittel bzw. dem Rohmaterial Dampf zugeführt, wodurch nicht nur die nötige Feuchtigkeit zugeführt wird, sondern auch eine Erhitzung stattfindet. Insbesondere dann, wenn die Erhitzung auf andere Weise durchgeführt wird, kann aber auch Wasser zugeführt werden.

Zweckmäßigerweise wird eine Vorkonditionierung vorgenommen, indem das Rohmaterial während 10 bis 30 Sekunden auf eine Temperatur von 60°C bis 100°C, insbesondere 70°C bis 90°C in einer feuchten Atmosphäre gehalten wird. Statt dieser sogenannten Kurzzeitkonditionierung kann auch eine Langzeitkonditionierung in vielen Fällen zweckmäßig sein, die während 5 bis 10 Minuten bei Temperaturen von 90°C bis 100°C durchgeführt wird.

An diese Vorkonditionierung wird sich dann normalerweise noch ein weiterer hydrothermischer Schritt anschließen, insbesondere in einem Expander. In einem solchen Expander wird das Material durch ein Förderelement, insbesondere eine Förderschnecke, gegen ein mit einer engen Öffnung versehenes Austrittsende gedrückt. Dadurch wird nicht nur eine Druckerhöhung, sondern durch die Reibung auch eine Temperaturerhöhung bewirkt, die durch Hinzufügen von Dampf noch erhöht werden kann. Zweckmäßigerweise wird dabei im Expander bei Temperaturen bis ungefähr 170°C, insbesondere bis ungefähr 150°C gearbeitet. Bei anderen Ausführungsformen des Verfahrens wird man je nach Rohmaterial bzw. Futtermittel bei Temperaturen bis ungefähr 125°C oder bei Temperaturen arbeiten, die um 100°C oder etwas über 100°C liegen.

Bei einer anderen Ausführungsform besteht die hydrothermische Behandlung darin, daß das Material in vorteilhafter Weise bis zu 30 Minuten, bei anderen Ausführungsformen bis zu ungefähr 60 Minuten auf Temperaturen von 100°C gehalten wird. Bei einer anderen Ausführungsform, dem sogenannten Toasten, findet diese Wärmebehandlung bei erhöhtem Druck von bis zu 5 bar, insbesondere bis zu ungefähr 3 bar während 1 bis 5 Minuten statt.

Bei den obigen Zeit- und Temperaturparametern handelt es sich um besonders zweckmäßige Kombinationen. In vielen Fällen wird man dabei in der Nähe der oberen Grenze der angegebenen Temperaturen und entsprechend kürzerer Zeit arbeiten. Die obigen Temperaturen können dabei sogar kurzzeitig überschritten werden. Insgesamt kommt es hier im wesentlichen auf ein Produkt von Zeit und Temperatur an. Je höher die Temperatur ist, desto kürzer kann auch die Behandlungszeit gewählt werden, was nicht nur einen höheren Materialdurchsatz ermöglicht, sondern in vielen Fällen auch zu besseren Ergebnissen führt.

Zweckmäßigerweise aber nicht zwangsmäßig wird nach der Vorkonditionierung und/oder nach der Behandlung im Expander eine Pelletierung durchgeführt. Diese dient im wesentlichen dazu, das Futtermittel in die vom Tier angenommene Granulatform zu versetzen. Zu einem nicht unwesentlichen Teil wird aber auch in der Pelletpresse bei der erhöhten Temperatur noch eine Erhöhung des im Pansen des Wiederkäuers verdaubaren Stärkeanteils stattfinden, so daß eine Pelletierung nicht immer vorteilhaft ist.

Als entscheidender Teilschritt bei dem erfindungsgemäßen Verfahren hat sich die produktabhängige Zerkleinerung der Futtermittel herausgestellt. Je nach Rohmaterial wird man unzerkleinerte Körner verwenden, die natürlich den Vorteil mit sich bringen, daß die Verdauungssäfte im Pansen die Stärke nicht so leicht aufschließen können. In anderen Fällen haben diese unzerkleinerten Körner aber den Nachteil, daß im Dünndarm die Stärke nicht vollständig in Glucose umgewandelt werden kann. Es ist daher zweckmäßig, wenn die Körner angebrochen oder gequetscht werden.

Die Zerkleinerung der Körner kann dabei in einer Hammermühle stattfinden. Als besonders zweckmäßig hat sich für diese Aufgabe aber ein Walzenstuhl erwiesen. Dabei muß aber generell berücksichtigt werden, daß die Stärkekörner möglichst wenig geschädigt werden.

Zusammenfassend kann festgestellt werden, daß durch die Erfindung ein Verfahren geschaffen wird, das zwar wesentliche Ähnlichkeiten mit bereits bekannten Behandlungsverfahren für Futtermittel hat, die sich jedoch meist auf die Verdauung bei Einmagentieren beziehen. Durch besondere Wahl der Parameter wird aber die Wirkung erzielt, daß die Verdaubarkeit von Kohlehydraten im Pansen verringert wird, so daß diese Kohlehydrate im Dünndarm für die Verwertung zur Verfügung stehen, wodurch bei gleicher Futtermenge die Milchleistung erhöht wird. Dies ist diametral entgegengesetzt zu dem, was der Fachmann normalerweise von Verfahren dieser Art erwartet, nämlich eine Erhöhung der Verdaulichkeit von Futtermitteln.

Im folgenden wird eine Vorrichtung beispielsweise beschrieben, mit der das erfindungsgemäße Verfahren durchgeführt werden kann. Es zeigen:
- Fig. 1: das Ablaufschema einer ersten Ausführungsform des erfindungsgemäßen Verfahrens;
- Fig. 2: das Ablaufschema einer zweiten Ausführungsform des erfindungsgemäßen Verfahrens; und
- Fig. 3-5: graphische Darstellungen von Versuchsergebnissen mit Futtermitteln zum Bestimmen der Futterausnutzung.

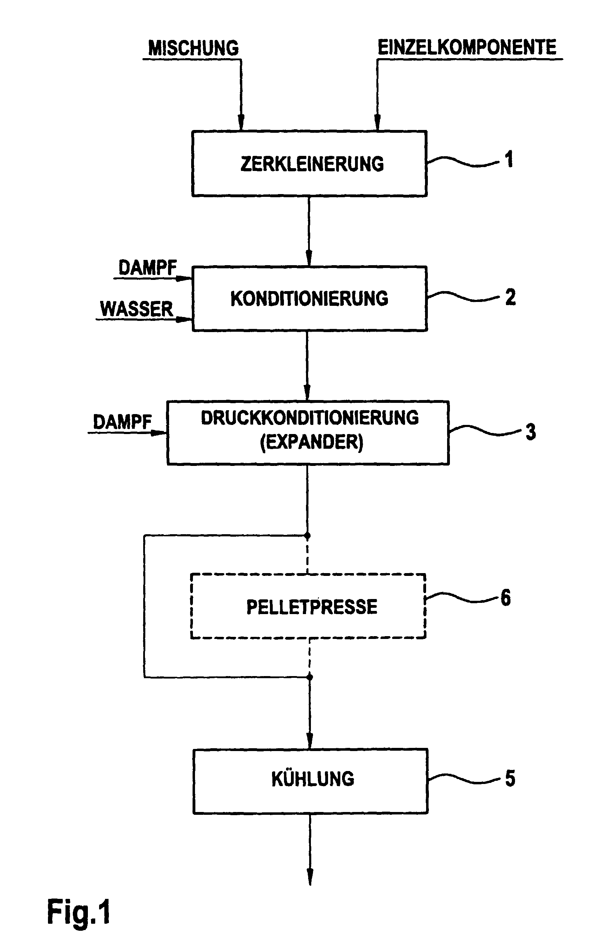

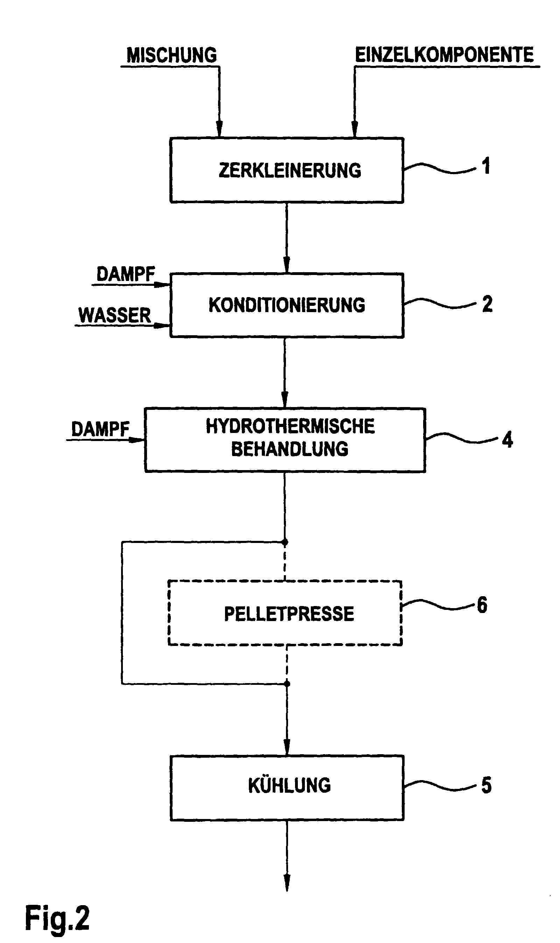

Bei den in den Figuren 1 und 2 schematisch dargestellten Ausführungsformen des erfindungsgemäßen Verfahrens wird eine Futtermittelmischung oder aber eine Einzelkomponente zunächst einem Zerkleinerungsschritt 1 in einem Walzenstuhl oder einer Hammermühle unterworfen. Es erfolgt dann bei 2 eine Kurzzeitkonditionierung während ungefähr 10 bis 30 Sekunden bei Temperaturen von ungefähr 60°C bis 100°C, insbesondere ungefähr 70°C bis 90°C. Eine weitere Behandlung erfolgt dann anschließend beim Verfahren der Figur 1 in einem Expander im Schritt 3. Hierbei wird das Material durch ein Förderelement, insbesondere eine Förderschnecke gegen das Austragsende hin verdichtet, wodurch Wärme erzeugt wird und das Material mit Drücken von bis zu 50 bar beaufschlagt wird. Zusätzlich kann Dampf zugefügt werden, so daß sich die Temperatur nicht nur durch die Reibungswärme, sondern auch durch den Dampf erhöht. Das Material wird dann durch eine enge Öffnung, insbesondere einen Ringspalt oder andere enge Schlitze entspannt. Alternativ zum Ringspalt kann auch eine Lochmatrize verwendet werden. Das Produkt tritt als geformtes Pellet aus der Matrize aus, damit kann die Pelletierung entfallen. Im Gegensatz zur Kollerpresse entsteht keine Zerkleinerung zwischen Koller und Matrize, so daß die Kornstruktur erhalten bleibt. Anschließend wird das behandelte Futtermittel bei Schritt 5 gekühlt und steht dann für die Lagerung oder den Abtransport bereit. Alternativ kann das Material nach der Druckkonditionierung im Schritt 3 einer Pelletpresse 6 zugeführt werden, wo es durch Kollerrollen durch Matrizenbohrungen gepreßt wird, um dem Futtermittel eine für das Tier eher annehmbare Form zu geben. Dies kann sowohl in einer Pelletpresse mit Flachmatrize als auch mit Ringmatrize geschehen.

Beim Verfahren der Figur 2 ist statt des Druckkonditionierungsschritts 3 in einem Expander eine hydrothermische Behandlung im Schritt 4 vorgesehen. Dies kann entweder in einem hydrothermischen Reaktor während ungefähr 5 bis ungefähr 30 oder sogar bis ungefähr 60 Minuten bei Temperaturen von 80°C bis 100°C durchgeführt werden. Andererseits kann die hydrothermische Behandlung im Schritt 4 auch in einem hydrothermischen Druckreaktor (Drucktoaster) während Zeiten von ungefähr 1 Minute bis ungefähr 5 Minuten bei Temperaturen von ungefähr 100°C bis ungefähr 150°C und Drücken von ungefähr 1 bar bis ungefähr 5 bar stattfinden.

Nach dem Verfahren hergestellte Futtermittel wurden mit dem Hohenheimer Futterwerttest (Handbuch der landwirtschaftlichen Versuchs- und Untersuchungsmethodik (Methodenbuch), Verlag J. Neumann-Neudamm, Melsungen, Berlin, Basel, Wien, Methodenbuch III 4. Ergänzungslieferung 1997) untersucht. Diese national und international zugelassene Methode simuliert den Abbau und die Abbaugeschwindigkeit der organischen Substanz von Futtermitteln im Pansen von Wiederkäuern. Da ca. 60 % der organischen Substanz aus Stärke besteht, erhält man dabei auch eine recht gute Aussage über die Abbaugeschwindigkeit der Stärke.

Zu diesem Zweck wird einer präparierten Futtermittelprobe bei definierten Temperaturen Pansenflüssigkeit zugesetzt, die einem lebenden Tier entnommen wird. Durch die Einwirkung der Pansenflüssigkeit wird aufgrund von mikrobiellen und bakteriellen Umsetzungen Gas freigesetzt und gemessen. Die freigesetzte Gasmenge nach 24 h, gemessen in Milliliter pro Milligramm Trockensubstanz des Futtermittels, fließt als Faktor in die Schätzgleichung zur Energiebewertung von Rinderfutter ein. Werden während 24 h Teilmessungen vorgenommen, z. B. in stündlichem Abstand, erhält man eine Abbaukurve, welche die Höhe und die Geschwindigkeit des Abbaus der organischen Substanz zeigt. Durch Zerkleinerung der Futtermittel und durch Wärmebehandlung kann die Abbaugeschwindigkeit beeinflußt werden. Ideal wäre, wenn die Abbaucharakteristik von Stärke, Protein und Faser synchron verläuft. Dann ist die höchste Futterausnutzung gewährleistet und auch die höchste Futteraufnahme möglich. Futteraufnahme und Futterausnutzung ermöglichen eine maximale Leistung.

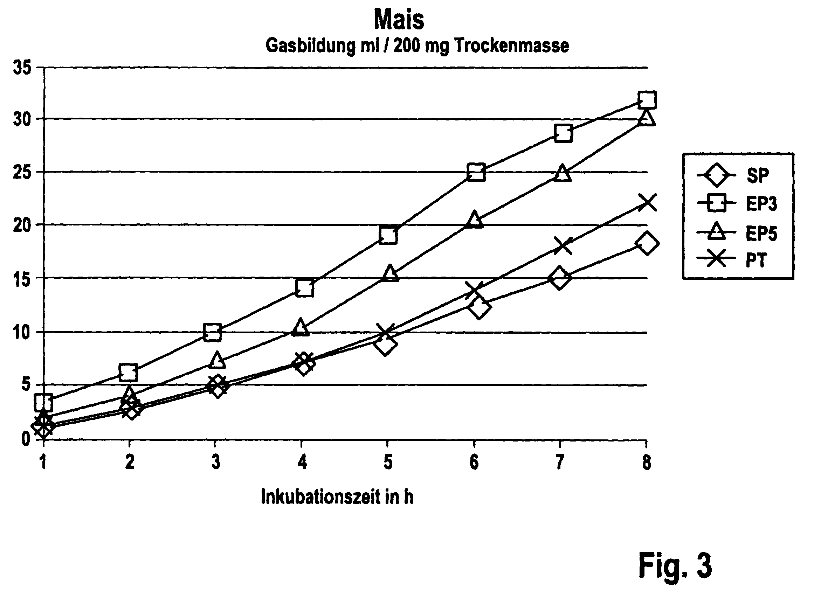

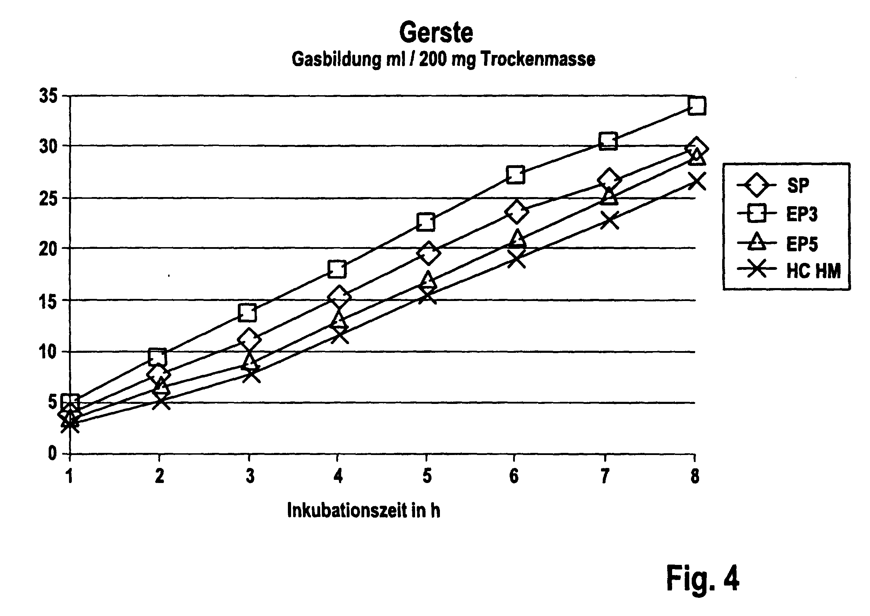

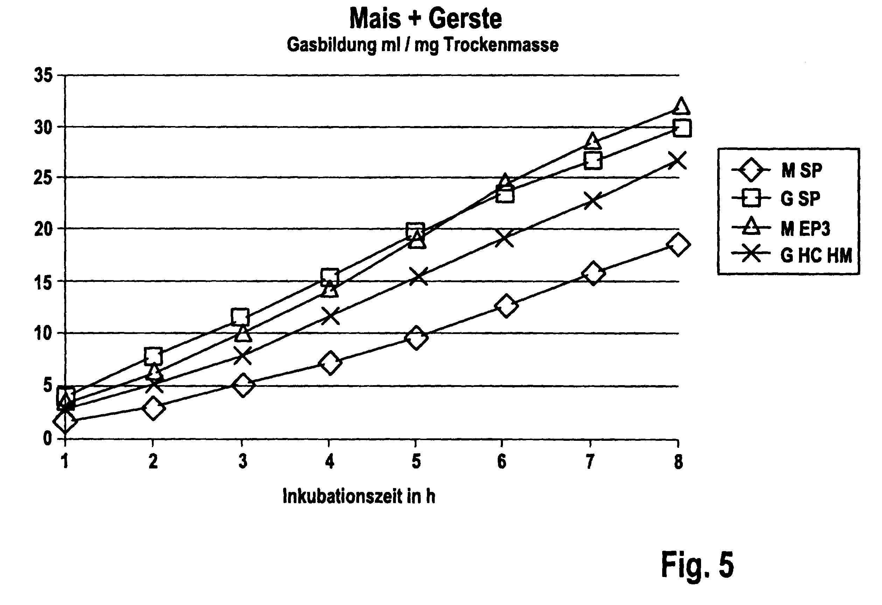

Die Figuren 3 bis 5 zeigen grafische Darstellungen von Untersuchungsergebnissen. In Figur 3 sind Versuchsergebnisse mit Gerste, in Figur 4 Versuchsergebnisse mit Mais und in Figur 5 zum Vergleich Versuchsergebnisse einerseits mit Mais und anderseits mit Gerste dargestellt. Die verschiedenen Verfahren, mit denen diese Futtermittel behandelt wurden, sind die folgenden:
- SP:: (steam pelleting), traditionelle Art der Pelletierung, nämlich Behandlung bei 80°C in einem Konditionierer und anschließend bei 90°C in einer Pelletpresse.
- EP3:: (Expander, Pelletpresse), Behandlung in einem Kurzzeitkonditionierer bei 80°C, anschließend in einem Ringspaltexpander bei 130°C und dann beim 90°C in einer Pelletpresse.
- EP5:: Behandlung bei 100°C während 10 Minuten in einem Konditionierer und anschließend bei 130°C in einem Expander mit einer Lochmatrize. In diesem Falle ist eine Pelletpresse nicht erforderlich. Im Gegensatz zur Pelletpresse (Kollerpresse) gibt es keine Reibung auf der Matrize.
- PT:: (pressure toasting), Behandlung während 3 Minuten bei 3 bar Druck und 130°C in einem Autoklav, anschließende Behandlung in der Pelletpresse bei 90°C.
- HC HM: (hydrothermal cooking, hammer mill), druckloses Kochen bei 100°C während 60 Minuten, anschließendes Zerkleinern in einer Hammermühle.

### I. Mais

Maisstärke ist schwer abbaubar, also pansenstabil. Maisstärke ist auch schlecht abbaubar im Dünndarm, so daß unbehandelter Mais nur zu insgesamt 85 % verdaut wird. Ziel einer Wärmebehandlung ist, durch Stärkeaufschluß den Abbau im Pansen und die Verdaulichkeit im Dünndarm zu erhöhen, so daß eine Gesamtverdauung von 95 % erreicht wird. Es findet also ein Stärkeaufschluß statt. Aus den Kurven in Figur 3 ist zu erkennen, daß sowohl mit dem Verfahren SP als auch mit dem Verfahren EP 3 im wesentlichen eine Verdoppelung der Abbaugeschwindigkeit gegenüber Drucktoasten (PT) erreicht wird. Die Kurven zeigen nur die Meßwerte bis 8 h, da dies ungefähr der Verweilzeit des Futtermittels im Pansen von 6 bis 8 Stunden entspricht.

### II. Gerste, Weizen und Hafer

Die Stärken dieser Getreide bauen sehr schnell im Pansen ab, und ein Stärkeaufschluß würde diesen Vorgang noch beschleunigen. Es gelangt also weniger Stärke in den Dünndarm. Ziel einer geeigneten Wärmebehandlung ist es hier, die Stärke nicht aufzuschließen, sondern vor dem Abbau im Pansen zu schützen, so daß mehr Stärke in den Dünndarm gelangt. Die Kurve der Figur 4 zeigt, daß gegenüber dem Verfahren SP durch das Verfahren HC HM die Abbaurate nach 8 h von 30 auf 26 Milliliter pro 200 Milligramm Trockenmasse verringert wird, die Abbaugeschwindigkeit wird also verringert und mehr Stärke fließt in den Dünndarm.

Durch verschiedene Behandlungsmethoden kann also die Abbaubarkeit von Stärke aus Mais bzw. Gerste/Weizen/Hafer im Pansen beeinflußt werden. Dabei spielt nicht nur eine Rolle, wieviel Stärke in den Dünndarm fließt. Wertbestimmend ist vielmehr auch die Abbaugeschwindigkeit der Stärke im Pansen. Diese soll zur Energieversorgung der mikrobiellen Proteinsynthese möglichst synchron zum Proteinabbau und in Übereinstimmung zur Faserfermentation verlaufen. Es kann daher futtertechnisch ein Gewinn sein, wenn aus einer schnell abbauenden Stärke aus Gerste eine langsam abbauende Wirkung, oder wenn aus einer langsam abbauenden Maisstärke eine schnell abbauende wird. Durch gezielte technische Behandlung der Getreide sind daher maßgeschneiderte Abbauraten und damit eine Optimierung der mikrobiellen Proteinsynthese möglich. Durch Synchronisation der Abbauraten wird dann auch die Futteraufnahme erhöht, die ebenfalls zur Erhöhung der Milchleistung beiträgt.

Eine hydrothermische Behandlung führt auch immer zu einer Proteinänderung im Getreide, d. h., daß der Anteil an pansenstabilem Protein erhöht wird. Dies beruht darauf, daß bei passender Behandlung das denaturierte Protein die Stärkekörner bei Weizen und Gerste umschließt und damit den mikrobiellen Abbau verzögert.

## Patentansprüche

1. Verfahren zur hydrothermischen Behandlung von Einzelfuttermitteln und Futtermittelmischungen für Wiederkäuer, insbesondere Milchkühe und Mastrinder, dadurch gekennzeichnet, daß das feuchte oder angefeuchtete Rohmaterial zum Erhöhen des im Pansen des Wiederkäuers nichtverdaubaren Kohlehydratanteils, insbesondere Stärkeanteils einer erhöhten Temperatur von mindestens ungefähr 80°C und höchstens ungefähr 180°C und einem Druck von mindestens 1 bar bis ca. 50 bar ausgesetzt wird.

2. Verfahren nach Anspruch 1, dadurch gekennzeichnet, daß dem Rohmaterial Dampf zugeführt wird.

3. Verfahren nach Anspruch 1, dadurch gekennzeichnet, daß dem Rohmaterial Wasser hinzugefügt wird.

4. Verfahren nach einem der Ansprüche 1 bis 3, dadurch gekennzeichnet, daß eine Vorkonditionierung während ungefähr 10 bis 120 Sekunden bei Temperaturen von ungefähr 60°C bis 100°C, insbesondere ungefähr 70°C bis 90°C stattfindet.

5. Verfahren nach einem der Ansprüche 1 bis 3, dadurch gekennzeichnet, daß das Vorkonditionieren während ungefähr 5 bis 10 Minuten bei ungefähr 90° bis 100°C stattfindet.

6. Verfahren nach einem der Ansprüche 1 bis 3, dadurch gekennzeichnet, daß eine hydrothermische Behandlung (Kochen) bei ungefähr 100°C während bis zu 30 Minuten, vorzugsweise während bis zu ungefähr 60 Minuten durchgeführt wird.

7. Verfahren nach einem der Ansprüche 1 bis 3, dadurch gekennzeichnet, daß die hydrothermische Behandlung bei Drücken bis ungefähr 5 bar, vorzugsweise bis zu ungefähr 3 bar bei Temperaturen von ungefähr 130°C während 1 bis 5 Minuten durchgeführt wird.

8. Verfahren nach einem der Ansprüche 1 bis 5, daß eine Behandlung in einem Expander bei Temperaturen bis ungefähr 170°C, insbesondere bis ungefähr 130°C und einem Druck von 3 bis 50 bar insbesondere 10 bis 50 bar stattfindet.

9. Verfahren nach Anspruch 8, dadurch gekennzeichnet, daß die Behandlung in einem Expander bei Temperaturen von wenig über 100°C bis ungefähr 125°C durchgeführt wird.

10. Verfahren nach einem der Ansprüche 1 bis 9, dadurch gekennzeichnet, daß anschließend eine Pelletierung in einer Pelletpresse vorgenommen wird.

11. Verfahren nach einem der Ansprüche 1-10, dadurch gekennzeichnet, daß der Expander mit einer Lochmatrize ausgerüstet ist, wodurch die Stärkekörner weniger geschädigt als in der Pelletpresse werden, wobei eine Pelletpresse nicht vorgesehen wird.

12. Verfahren nach einem der Ansprüche 4 bis 11, dadurch gekennzeichnet, daß es bei höheren Temperaturen, insbesondere noch höheren als den angegebenen Temperaturen, dafür aber verkürzten Behandlungszeiten durchgeführt wird.

13. Verfahren nach einem der Ansprüche 4 bis 12, dadurch gekennzeichnet, daß es bei höherem Druck, insbesondere noch höherem als den angegebenen Drücken, dafür aber verkürzten Behandlungszeiten durchgeführt wird.

14. Verfahren nach einem der Ansprüche 1 bis 13, dadurch gekennzeichnet, daß das Rohmaterial unzerkleinerte Körner enthält.

15. Verfahren nach einem der Ansprüche 1 bis 14, dadurch gekennzeichnet, daß das Rohmaterial angebrochene oder gequetschte Körner enthält.

16. Verfahren nach einem der Ansprüche 1 bis 15, dadurch gekennzeichnet, daß das Rohmaterial in einem Walzenstuhl zerkleinerte Teilchen enthält.

17. Verfahren nach einem der Ansprüche 1 bis 15, dadurch gekennzeichnet, daß das Rohmaterial in einer Hammermühle zerkleinerte Teilchen enthält.

18. Futtermittel, dadurch gekennzeichnet, daß es nach einem Verfahren der Ansprüche 1 bis 17 hergestellt ist.
